# FASCICULE DE BREVET EUROPEEN

(11) **EP 4 406 733 B1**
(45) Date de publication et mention de la délivrance du brevet: **02.07.2025**
(21) Numéro de dépôt: 24152711.8
(22) Date de dépôt: 18.01.2024
(51) Int. Cl.: B29D 35/06, B29D 35/12, B29D 35/04

(54) **PROCÉDÉ ET DISPOSITIF DE FABRICATION D'UNE CHAUSSURE EN PLASTIQUE**
VERFAHREN UND VORRICHTUNG ZUR HERSTELLUNG EINES KUNSTSTOFFSCHUHS
METHOD AND DEVICE FOR PRODUCING A PLASTIC SHOE

(30) Priorité: 24.01.2023 FR 2300641
(43) Date de publication de la demande: 31.07.2024
(73) Titulaire: L'Atelier Insolite, 49230 Sèvremoine (FR)
(72) Inventeur: ROY, Thomas, 49450 Roussay (FR); Lasson, Christophe, 44190 Gétigné (FR)
(74) Mandataire: Lequien, Philippe

(56) Documents cités:
- JP-A- S5 245 438
- US-A- 4 342 160
- US-A1- 2016 262 494
- US-A1- 2020 154 829

## Description

Le domaine de l'invention est celui de la conception et de la fabrication des articles d'habillement.

Plus précisément, l'invention concerne en particulier un procédé et un dispositif de fabrication de chaussures en plastique.

Plus particulièrement, l'invention a trait à la fabrication des chaussures en plastique du type comprenant une chaussette textile et une couche thermoplastique destinée à envelopper la chaussette textile en étant moulée dessus.

Ces chaussures sont notamment appelées bottes, bottines ou encore sabots.

D'une manière connue, de telles chaussures en plastique sont obtenues par mise en place d'une chaussette textile sur un embauchoir, fermeture d'un moule autour d'une partie inférieure de l'embauchoir de sorte à placer la chaussette textile dans une cavité de moulage formée une fois le moule fermé.

La matière plastique est alors injectée dans le moule pour former la chaussure. La matière plastique se solidarise alors avec la chaussette textile pour former un ensemble monobloc.

Après l'injection et la solidification de la matière plastique, le moule est ouvert pour permettre l'extraction de la chaussure formée.

Après extraction de la chaussure formée, une étape d'ébavurage de la chaussure est réalisée.

En effet, lors de la fermeture du moule, une partie de la chaussette textile dépasse du moule.

L'opération d'ébavurage consiste donc à retirer l'excédent de chaussette textile qui n'est pas solidaire de la matière plastique pour obtenir une chaussure finie.

Ce surplus de chaussette textile est nécessaire puisqu'il permet la fixation de la chaussette sur l'embauchoir.

Toutefois, l'opération d'ébavurage prends du temps et engendre une perte de matière, notamment de la matière textile non solidaire de la matière plastique.

Des solutions pour limiter la quantité de matière perdue ont notamment été développées.

Parmi ces solutions, cette décrite dans le document de brevet publié sous le numéro FR 1 163 908 décrit un embauchoir intégrant des canaux fluidiques d'aspiration s'étendant selon une hauteur de la chaussure à fabriquer. JP S52 45438 A concerne la fabrication de chaussures.

Lorsque la chaussette textile est enfilée sur l'embauchoir, elle est aspirée par les canaux fluidiques, ce qui assure le maintien de la chaussette sur l'embauchoir, et donc permet de couper la chaussette à la dimension de la chaussure à fabriquer.

Cela permet ainsi de réduire la perte de matière comparativement aux techniques de fabrication connues.

Toutefois, cette technique n'est pas sans inconvénients.

Premièrement, l'aspiration de la chaussette textile peut provoquer la fabrication de chaussures inconfortables.

En effet, l'aspiration de la chaussette peut créer une rainure dans laquelle la matière plastique prend place, une telle rainure crée alors une saillie interne de matière dans la chaussure, ce qui peut rendre inconfortable l'utilisation de la chaussure.

Deuxièmement, la présence des canaux fluidiques complexifie l'embauchoir, ce qui le rend plus coûteux et oblige à une maintenance régulière pour éviter l'obstruction des canaux fluidiques qui empêcherait la fabrication des chaussures.

Troisièmement, l'aspiration des chaussettes nécessite l'utilisation de pompes permettant de créer une dépression dans les canaux fluidiques pour assurer l'aspiration de la chaussette textile.

L'utilisation de telles pompes engendre alors la consommation énergétique importante pour la fabrication des chaussures.

L'invention a notamment pour objectif de pallier les inconvénients de l'art antérieur.

Plus précisément, l'invention a pour objectif de proposer un procédé de fabrication de chaussures en plastique, et un dispositif de fabrication qui évitent la perte de chaussette textile tout en diminuant la consommation énergétique du dispositif de fabrication.

L'invention a également pour objectif de fournir un tel dispositif qui soit simple d'utilisation notamment pour la fixation de la chaussette textile.

L'invention a en outre pour objectif de fournir un tel dispositif qui soit simple de fabrication et d'entretien.

Ces objectifs, ainsi que d'autres qui apparaîtront par la suite, sont atteints grâce à l'invention qui a pour objet un procédé de fabrication d'une chaussure en plastique du type comprenant une chaussette textile prenant la forme d'un fourreau ayant une première extrémité borgne et une deuxième extrémité ouverte, et une couche thermoplastique moulée sur la chaussette textile, le procédé comprenant une étape de fixation de la chaussette textile sur un noyau formant embauchoir, destiné à être logé dans un moule définissant une cavité de moulage à la forme de la chaussure et une étape de moulage de la couche thermoplastique sur la chaussette textile,
caractérisé en ce que lors de l'étape de fixation, la chaussette textile est solidarisée au noyau par sa deuxième extrémité ouverte, et en ce que lors de l'étape de moulage, la deuxième extrémité de la chaussette textile est située dans la cavité de moulage,
et en ce que la chaussette textile est solidarisée au noyau par une mise au contact de la chaussette textile avec une bande d'adhésif portée par le noyau.

Un tel procédé permet de limiter la perte de chaussette textile tout en diminuant la consommation énergétique du dispositif de fabrication.

Grace à la fixation de la chaussette textile sur le noyau par sa deuxième extrémité, il n'est plus nécessaire de laisser dépasser une sur-longueur de chaussette textile qu'il est nécessaire de couper une fois la chaussure obtenue.

Par ailleurs, les machines nécessaires à la découpe des sur-longueurs de chaussette textile ne sont plus nécessaires, ce qui réduit la consommation énergétique pour la fabrication des chaussures.

En outre, le temps de fabrication des chaussures s'en trouve diminué, au bénéfice de la cadence de fabrication et du coût de revient des chaussures.

Grâce à la mise au contact de la chaussette textile sur le noyau, il est facilité le positionnement de la chaussette textile sur le noyau et il est limité la longueur de la chaussette textile au besoin.

En outre, cela permet de faciliter la mise en place manuelle de la chaussette textile sur le noyau par coopération entre la deuxième extrémité de la chaussette textile et la bande d'adhésif.

L'invention concerne également un dispositif de fabrication d'une chaussure en plastique du type comprenant une chaussette textile prenant la forme d'un fourreau ayant une première extrémité borgne et une deuxième extrémité ouverte, et une couche thermoplastique moulée sur la chaussette textile, le dispositif comprenant :
- un noyau formant embauchoir, destiné à porter la chaussette textile,
- un moule définissant une cavité de moulage à l'empreinte de la chaussure, le noyau portant la chaussette textile étant destiné à être reçu dans la cavité de moulage,
caractérisé en ce que le noyau intègre une bande d'adhésif destinée à coopérer avec la deuxième extrémité de la chaussette textile, la bande d'adhésif étant située dans la cavité de moulage lorsque le noyau est dans la cavité de moulage.

Un tel dispositif est simple d'utilisation et permet de fabriquer des chaussures de manière rapide.

En effet, par la fixation de la deuxième extrémité de la chaussette textile sur la bande d'adhésif, il est rapide de correctement positionner la chaussette textile sur le noyau tout en limitant, voire en supprimant, la reprise de la chaussure après moulage.

Cela s'explique par le fait que le dispositif permet de limiter la taille de la chaussette textile au seul besoin.

En outre, ce dispositif ne requiert pas d'apprentissage particulier comparativement aux dispositifs existants, mais offre, au contraire un avantage certain en ce qu'il permet de s'assurer du bon positionnement de la chaussette textile sur le noyau par la coopération de sa deuxième extrémité avec la bande d'adhésif.

Selon un aspect avantageux, lorsque le noyau est reçu dans la cavité de moulage, la bande d'adhésif est située au voisinage d'un contour de la cavité de moulage.

Cela permet de maintenir la chaussette textile dans une partie qui est la plus sollicitée et de s'assurer de son bon positionnement dans la chaussure fabriquée, en vue de l'utilisation de la chaussure.

En effet, en s'assurant du bon positionnement de la deuxième extrémité de la chaussette dans la chaussure, cela évite de créer des zones dans lesquelles la couche thermoplastique n'adhère pas à la chaussette textile.

Ainsi, lors de l'utilisation de la chaussure, notamment lors de l'insertion du pied de l'utilisateur, les risques d'arrachement de la chaussette textile par rapport à la couche thermoplastique sont limités, voire supprimés.

Selon un autre aspect avantageux, la bande d'adhésif sépare le noyau en une première portion destinée à être recouverte par la chaussette textile et une deuxième portion destinée à être dépourvue de la chaussette textile, et le noyau présente une rainure annulaire formant un décroché, le décroché étant situé dans la deuxième portion.

Le décroché permet de laisser un espace entre la chaussette textile et la cavité pour former une saillie radiale interne qui définit une lèvre de matière thermoplastique au-dessus de la chaussette textile.

Cela évite les risques de désolidarisation de la chaussette textile lors de l'insertion des pieds dans les chaussures.

Selon un autre aspect avantageux, la rainure annulaire est adjacente à la bande d'adhésif.

Ce positionnement de la rainure permet de positionner la lèvre de matière thermoplastique directement au contact de la deuxième extrémité de la chaussette textile. La deuxième extrémité de la chaussette textile, et sa solidarisation avec la couche thermoplastique, se trouvent protégés d'un arrachage par la présence de la saillie radiale interne.

Selon un autre aspect avantageux, la bande d'adhésif comprend une pluralité de crochets destinés à crocheter une maille constitutive de la chaussette textile.

Selon un autre aspect avantageux, la bande d'adhésif comprend une couche de colle du type repositionnable.

Selon un autre aspect avantageux, la bande d'adhésif comprend une couche de revêtement antidérapant.

Ces différents types de bandes d'adhésif permettent un maintien efficace de la deuxième extrémité de la chaussette sur le noyau.

Par ailleurs, ces différents types de bandes d'adhésif peuvent être choisis en fonction du matériau de la chaussette textile.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés décrits ci-après :
- la figure 1 est une représentation schématique en perspective d'un éclaté d'un dispositif de fabrication d'une chaussure, selon l'invention ;
- la figure 2 est une représentation en coupe d'un détail du dispositif de fabrication selon l'invention ;
- la figure 3 est une représentation schématique en perspective d'une chaussure en plastique, obtenue par le dispositif de fabrication des figures 1 et 2.

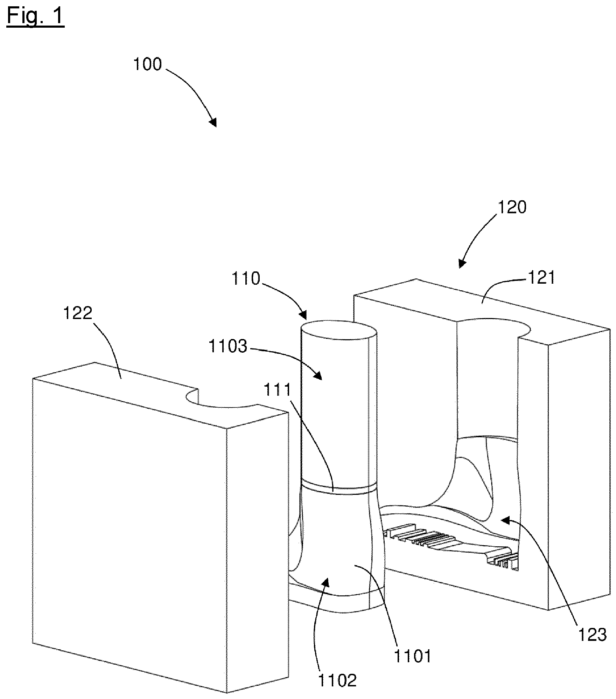

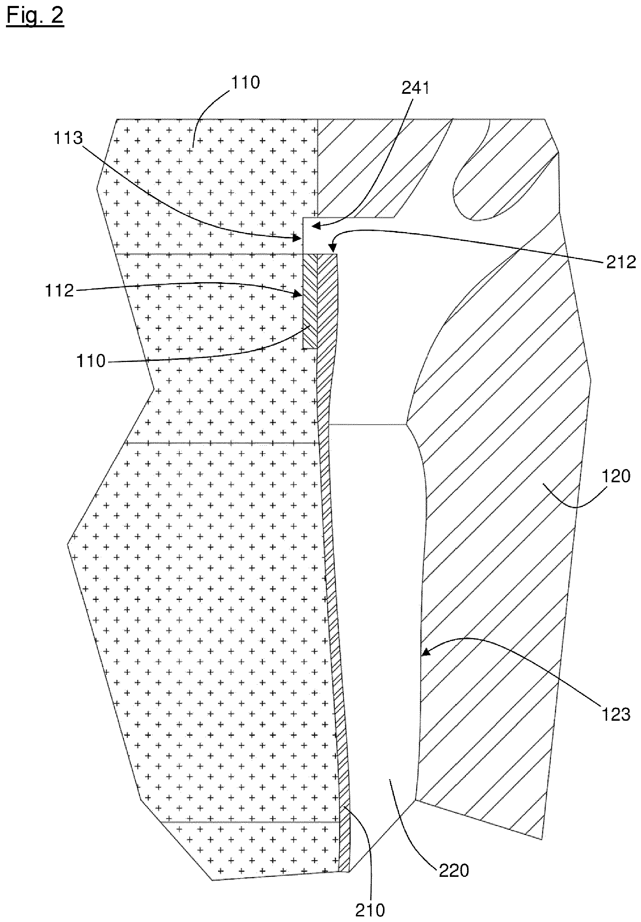

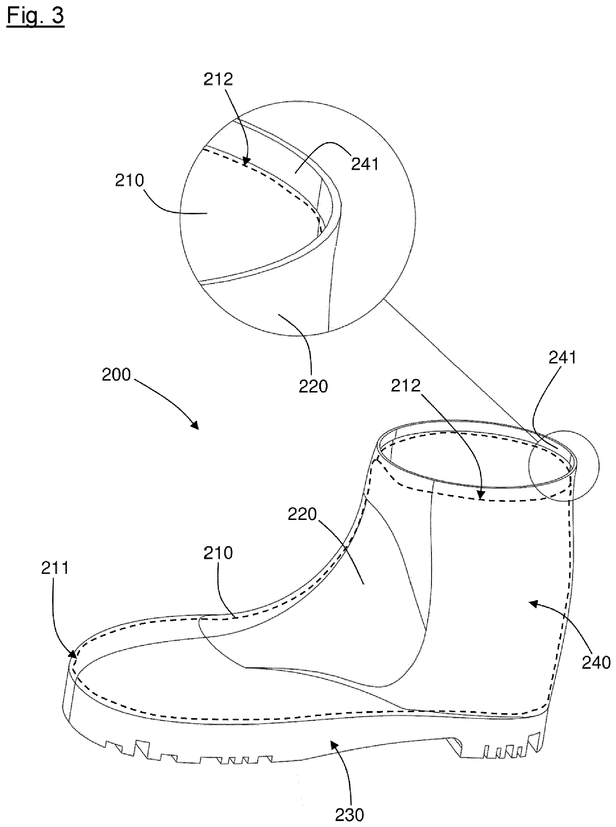

En référence aux figures 1 et 2, un dispositif 100 de fabrication d'une chaussure 200 en plastique, telle qu'illustrée par la figure 3, est à présent décrit.

La chaussure 200 plastique est du type comprenant une chaussette textile 210 prenant la forme d'un fourreau ayant une première extrémité 211 borgne et une deuxième extrémité 212 ouverte, et une couche thermoplastique 220 moulée sur la chaussette textile 210.

La chaussure 200, telle qu'illustrée par la figure 3, présente une semelle 230 et une tige 240 s'étendant depuis la semelle 230.

Le dispositif 100 de fabrication comprend :
- un noyau 110 formant embauchoir,
- un moule 120 définissant une cavité de moulage.

Plus spécifiquement, le noyau 110 est destiné à porter la chaussette textile 210.

Le moule 120 comprend une première coque 121 et une deuxième coque 122. Les deux coques 121, 122 mobiles l'une par rapport à l'autre entre une position d'ouverture dans laquelle elles sont écartées l'une de l'autre et une position de fermeture dans laquelle elles sont accolées et définissent, entre elles, la cavité de moulage.

Chaque coque 121, 122 présente une empreinte 123 destinée à former la cavité de moulage lorsque les deux coques 121, 122 sont dans leur position de fermeture.

Selon le mode de réalisation illustré par la figure 1, le moule 120 comprend uniquement une première coque 121 et une deuxième coque 122, la première coque 121 et la deuxième coque 122 étant mobiles l'une par rapport à l'autre en translation.

Selon une variante de réalisation, le moule 120 peut intégrer une troisième coque destinée à former la semelle 230 de la chaussure 200.

En référence à la figure 2, lorsque la première coque 121 et la deuxième coque 122 sont dans leur position de fermeture, le noyau 110 est reçu dans la cavité de moulage.

En référence aux figures 1 et 2, le noyau 110 intègre une bande d'adhésif 111 destinée à coopérer avec la chaussette textile 210.

Comme expliqué par la suite, la bande d'adhésif 111 est destinée à coopérer avec la deuxième extrémité 212 de la chaussette.

En référence à la figure 2, le noyau 110 présente un renfoncement 112 destiné à loger la bande d'adhésif 111.

Le renfoncement 112 est du type annulaire. En d'autres termes, le renfoncement 112 s'étend selon un contour fermé tout autour du noyau 110 et s'ouvre sur une surface externe 1101 du noyau 110.

Le renfoncement 112 est dimensionné de sorte que la bande d'adhésif 111 affleure avec la surface extérieure 1101 du noyau 110.

La surface extérieure 1101 du noyau 110 est plus particulièrement la surface contre laquelle vient en appui la chaussette 210.

En outre, tel qu'illustré par la figure 2, le noyau 110 présente une rainure annulaire 113 formant un décroché.

La bande d'adhésif 111 sépare ainsi le noyau entre une première portion destinée à être recouverte par la chaussette textile 210 et une deuxième portion non recouverte par la chaussette textile 210.

La rainure annulaire 113 est située dans la deuxième portion.

Autrement dit, la rainure annulaire 113 est destinée à être dépourvue de couverture par la chaussette textile 210, c'est-à-dire qu'elle est destinée à ne pas être recouverte par la chaussette textile 210.

Plus spécifiquement, la rainure annulaire 113 est adjacente à la bande d'adhésif 111.

Comme cela est expliqué ci-après, lors du moulage de la chaussure 200, la rainure annulaire 113 ne reçoit que la couche thermoplastique 220.

Cela permet alors de créer, dans la tige 240, une saillie radiale interne 241.

La saillie radiale interne 241 s'étend ainsi vers l'intérieur de la chaussure 210.

Plus particulièrement, la saillie radiale interne 241 forme une lèvre contre laquelle la deuxième extrémité 212 de la chaussette textile 210 vient en appui.

Selon une première forme de réalisation, la bande d'adhésif comprend une pluralité de crochets destinés à crocheter une maille constitutive de la chaussette textile 210.

Cette première forme de réalisation est également appelée adhésif mécanique.

Selon une deuxième forme de réalisation, la bande d'adhésif 111 comprend une couche de colle du type repositionnable.

Selon une troisième forme de réalisation, la bande d'adhésif 111 comprend une couche de revêtement antidérapant. Le revêtement antidérapant est avantageusement choisi pour offrir une bonne friction avec la chaussette textile 210 en fonction de la matière constitutive de la chaussette thermique 210.

La fabrication d'une chaussure 200, telle qu'elle vient d'être décrite, est réalisée au moyen d'un procédé comprenant une étape de fixation de la chaussette textile 210 sur le noyau 110 et une étape de moulage de la couche thermoplastique 220.

Plus précisément, la chaussette textile 210 est enfilée sur le noyau 110 qui forme alors un embauchoir.

La chaussette textile 210 est enfilée sur le noyau 110 jusqu'à ce que la deuxième extrémité 212 ouverte de la chaussette textile 210 vienne au contact de la bande d'adhésif 111.

Lorsque la chaussette textile 210 est solidaire du noyau 110, le noyau 110 est inséré dans la cavité de moulage du moule 120.

Pour cela, la première partie 121 et la deuxième coque 122 du moule 120 sont positionnées dans leur position de fermeture, de sorte que leurs empreintes 123 respectives définissent la cavité de moulage.

Tel que cela est illustré par la figure 2, lorsque le noyau 110 est situé dans la cavité de moulage, la bande d'adhésif 111 est située dans la cavité de moulage.

Dès lors, la deuxième extrémité 212 ouverte de la chaussette textile 210 se trouve dans la cavité de moulage.

La bande d'adhésif 111 est alors située au voisinage du contour de la cavité de moulage du moule 120.

La rainure annulaire 123, dans l'empreinte 113, un épaulement permettant de créer la saillie radiale interne 241 de la tige 240 de la chaussure 200.

Lorsque le noyau 110 est situé dans la cavité de moulage, la couche thermoplastique 220 peut être injectée dans la cavité de moulage, de sorte à former la chaussure 200.

Lorsqu'elle est injectée dans la cavité de moulage, la couche thermoplastique 220 se solidarise avec la chaussette textile 210.

Après moulage, et éventuellement un refroidissement, les coques 121, 122 du moule 120 sont positionnées dans leur position d'ouverture et le noyau 110 est extrait.

La chaussure 200 formée et solidaire du noyau 110 peut être retirée du noyau 110.

Le retrait de la chaussure 200 formée, entraîne la désolidarisation de la chaussette textile 210 avec la bande d'adhésif 111.

En référence à la figure 3, lorsque la chaussure 200 est fabriquée, la chaussette textile 210 est solidaire de la couche thermoplastique 220, et la deuxième extrémité 212 ouverte de la chaussette textile 210 est protégée de tout arrachement de la couche thermoplastique 220 par l'intermédiaire de la saillie radiale interne 241.

En effet, lorsqu'un utilisateur insère son pied dans la chaussure 200, il ne peut pas décoller la chaussette textile 210.

En effet, le frottement du pied au niveau de la deuxième extrémité 212 ouverte, ne s'effectue pas sur la deuxième extrémité 212 par la présence de la saillie radiale interne 241.

Cela bénéficie alors à la durée de vie de la chaussure 200 puisque la chaussette textile 210 reste solidement attachée à la couche thermoplastique 220 sans risque d'en être arrachée.

En outre, grâce à la bande d'adhésif 111, la quantité de matière de la chaussette textile 210 est limitée au strict nécessaire.

Plus précisément, il n'est pas nécessaire de réaliser une opération de finition consistant à découper un surplus de chaussette textile 210, contrairement aux méthodes de fabrication connues.

Cela permet d'éviter un gâchis de matière de la chaussette textile 210.

En outre, cela simplifie la fabrication de la chaussure 200 par rapport aux solutions connues puisque moins d'opérations sont nécessaires. En conséquence, le coût de fabrication est également réduit.

Bien que plusieurs formes de réalisation de la bande d'adhésif 111 soient décrites, cette dernière pourrait être une combinaison de plusieurs formes de réalisation.

Par exemple, la bande d'adhésif 111 pourrait être formée de secteurs successifs réalisés chacun selon l'une des formes de réalisation précédemment décrites.

En variante, la bande d'adhésif 111 pourrait présenter une pluralité d'anneaux superposés les uns au-dessus des autres, chaque anneau étant réalisé selon l'une des formes de réalisation précédemment décrite.

## Revendications

1. Procédé de fabrication d'une chaussure (200) en plastique du type comprenant une chaussette textile (210) prenant la forme d'un fourreau ayant une première extrémité (211) borgne et une deuxième extrémité (212) ouverte, et une couche thermoplastique (220) moulée sur la chaussette textile (210), le procédé comprenant une étape de fixation de la chaussette textile (210) sur un noyau (110) formant embauchoir, destiné à être logé dans un moule (120) définissant une cavité de moulage à la forme de la chaussure (200) et une étape de moulage de la couche thermoplastique (220) sur la chaussette textile (210), **caractérisé en ce que** lors de l'étape de fixation, la chaussette textile (210) est solidarisée au noyau (110) par sa deuxième extrémité (212) ouverte, et **en ce que** lors de l'étape de moulage, la deuxième extrémité (212) de la chaussette textile est située dans la cavité de moulage, et **en ce que** la chaussette textile (210) est solidarisée au noyau (110) par une mise au contact de la chaussette textile (210) avec une bande d'adhésif (111) portée par le noyau (110).

2. Dispositif (100) de fabrication d'une chaussure (200) en plastique du type comprenant une chaussette textile (210) prenant la forme d'un fourreau ayant une première extrémité (211) borgne et une deuxième extrémité (212) ouverte, et une couche thermoplastique (220) moulée sur la chaussette textile (210), le dispositif (100) comprenant :
- un noyau (110) formant embauchoir, destiné à porter la chaussette textile (210),
- un moule (120) définissant une cavité de moulage à l'empreinte de la chaussure (200), le noyau (110) portant la chaussette textile (210) étant destiné à être reçu dans la cavité de moulage,
**caractérisé en ce que** le noyau (110) intègre une bande d'adhésif (111) destinée à coopérer avec la deuxième extrémité (212) de la chaussette textile (210), la bande d'adhésif (111) étant située dans la cavité de moulage lorsque le noyau (110) est dans la cavité de moulage.

3. Dispositif (100) selon la revendication précédente, **caractérisé en ce que**, lorsque le noyau (110) est reçu dans la cavité de moulage, la bande d'adhésif (111) est située au voisinage d'un contour de la cavité de moulage.

4. Dispositif (100) selon la revendication 2 ou 3, **caractérisé en ce que** la bande d'adhésif (111) sépare le noyau (110) en une première portion (1102) destinée à être recouverte par la chaussette textile (210) et une deuxième portion (1103) destinée à être dépourvue de la chaussette textile (210), et **en ce que** le noyau (110) présente une rainure annulaire (113) formant un décroché, le décroché étant situé dans la deuxième portion (1103).

5. Dispositif (100) selon la revendication précédente, **caractérisé en ce que** la rainure annulaire (113) est adjacente à la bande d'adhésif (111).

6. Dispositif (100) selon l'une des revendications 2 à 5, **caractérisé en ce que** la bande d'adhésif (111) comprend une pluralité de crochets destinés à crocheter une maille constitutive de la chaussette textile (210).

7. Dispositif (100) selon l'une des revendications 2 à 5, **caractérisé en ce que** la bande d'adhésif (111) comprend une couche de colle du type repositionnable.

8. Dispositif (100) selon l'une des revendications 2 à 5, **caractérisé en ce que** la bande d'adhésif (111) comprend une couche de revêtement antidérapant.

## Patentansprüche

1. Verfahren zum Herstellen eines Kunststoffschuhs (200) des Typs, der eine Textilsocke (210), die die Form einer Hülle annimmt, welche ein verschlossenes erstes Ende (211) und ein offenes zweites Ende (212) aufweist, und eine thermoplastische Schicht (220) umfasst, die auf die Textilsocke (210) geformt ist, wobei das Verfahren einen Schritt des Befestigens der Textilsocke (210) auf einem einen Schuhspanner bildenden Kern (110), der dazu bestimmt ist, in einer Form (120) aufgenommen zu werden, die einen Formhohlraum in der Form des Schuhs (200) definiert, und einen Schritt des Formens der thermoplastischen Schicht (220) auf der Textilsocke (210) umfasst, **dadurch gekennzeichnet, dass** die Textilsocke (210) beim Befestigungsschritt durch ihr offenes zweites Ende (212) fest mit dem Kern (110) verbunden wird, und dass sich beim Formschritt das zweite Ende (212) der Textilsocke in dem Formhohlraum befindet, und dass die Textilsocke (210) durch Inkontaktbringen der Textilsocke (210) mit einem vom Kern (110) getragenen Klebstoffstreifen (111) fest mit dem Kern (110) verbunden wird.

2. Vorrichtung (100) zum Herstellen eines Kunststoffschuhs (200) des Typs, der eine Textilsocke (210), die die Form einer Hülle annimmt, welche ein verschlossenes erstes Ende (211) und ein offenes zweites Ende (212) aufweist, und eine thermoplastische Schicht (220) umfasst, die auf die Textilsocke (210) geformt ist, wobei die Vorrichtung (100) umfasst:
- einen Kern (110), der einen Schuhspanner bildet und dazu bestimmt ist, die Textilsocke (210) zu tragen,
- eine Form (120), die einen Formhohlraum mit der Abformung des Schuhs (200) definiert, wobei der Kern (110), der die Textilsocke (210) trägt, dazu bestimmt ist, in den Formhohlraum aufgenommen zu werden,
**dadurch gekennzeichnet, dass** der Kern (110) einen Klebstoffstreifen (111) integriert, der dazu bestimmt ist, mit dem zweiten Ende (212) der Textilsocke (210) zusammenzuwirken, wobei sich der Klebstoffstreifen (111) im Formhohlraum befindet, wenn sich der Kern (110) im Formhohlraum befindet.

3. Vorrichtung (100) nach dem vorstehenden Anspruch, **dadurch gekennzeichnet, dass** sich der Klebstoffstreifen (111) in der Nähe einer Kontur des Formhohlraums befindet, wenn der Kern (110) in den Formhohlraum aufgenommen wird.

4. Vorrichtung (100) nach Anspruch 2 oder 3, **dadurch gekennzeichnet, dass** der Klebstoffstreifen (111) den Kern (110) in einen ersten Abschnitt (1102), der dazu bestimmt ist, von der Textilsocke (210) bedeckt zu werden, und einen zweiten Abschnitt (1103) trennt, der dazu bestimmt ist, frei von der Textilsocke (210) zu sein, und dass der Kern (110) eine ringförmige Nut (113) aufweist, die eine Aussparung bildet, wobei sich die Aussparung im zweiten Abschnitt (1103) befindet.

5. Vorrichtung (100) nach dem vorstehenden Anspruch, **dadurch gekennzeichnet, dass** die ringförmige Nut (113) an den Klebstoffstreifen (111) angrenzt.

6. Vorrichtung (100) nach einem der Ansprüche 2 bis 5, **dadurch gekennzeichnet, dass** der Klebstoffstreifen (111) eine Vielzahl von Haken umfasst, die dazu bestimmt sind, ein Maschenelement der Textilsocke (210) einzuhaken.

7. Vorrichtung (100) nach einem der Ansprüche 2 bis 5, **dadurch gekennzeichnet, dass** der Klebstoffstreifen (111) eine Klebstoffschicht vom repositionierbaren Typ umfasst.

8. Vorrichtung (100) nach einem der Ansprüche 2 bis 5, **dadurch gekennzeichnet, dass** der Klebstoffstreifen (111) eine rutschfeste Beschichtungsschicht umfasst.

## Claims

1. A method for manufacturing a plastic shoe (200) of the type comprising a textile sock (210) in the form of a sleeve having a first, blind, end (211) and a second, open, end (212), and a thermoplastic layer (220) moulded over the textile sock (210), the method comprising a step of fastening the textile sock (210) to a core (110) forming a shoetree, intended to be accommodated in a mould (120) defining a moulding cavity having the shape of the shoe (200) and a step of moulding the thermoplastic layer (220) over the textile sock (210), **characterised in that**, during the fastening step, the textile sock (210) is secured to the core (110) through its second, open, end (212), and **in that**, during the moulding step, the second end (212) of the textile sock is located in the moulding cavity, and **in that** the textile sock (210) is secured to the core (110) by contacting the textile sock (210) with an adhesive strip (111) carried by the core (110).

2. The device (100) for manufacturing a plastic shoe (200) of the type comprising a textile sock (210) in the form of a sleeve having a first, blind, end (211) and a second, open, end (212), and a thermoplastic layer (220) moulded over the textile sock (210), the device (100) comprising:
- a core (110) forming a shoetree, intended to carry the textile sock (210),
- a mould (120) defining a moulding cavity with the imprint of the shoe (200), the core (110) carrying the textile sock (210) being intended to be received in the moulding cavity,
**characterised in that** the core (110) integrates an adhesive strip (111) intended to cooperate with the second end (212) of the textile sock (210), the adhesive strip (111) being located in the moulding cavity when the core (110) is in the moulding cavity.

3. The device (100) according to the preceding claim, **characterised in that**, when the core (110) is received in the moulding cavity, the adhesive strip (111) is located in the vicinity of a contour of the moulding cavity.

4. The device (100) according to claim 2 or 3, **characterised in that** the adhesive strip (111) separates the core (110) into a first portion (1102) intended to be covered with the textile sock (210) and a second portion (1103) intended to be devoid of the textile sock (210), and **in that** the core (110) has an annular groove (113) forming a cut-out, the cut-out being located in the second portion (1103).

5. The device (100) according to the preceding claim, **characterised in that** the annular groove (113) is adjacent to the adhesive strip (111).

6. The device (100) according to one of claims 2 to 5, **characterised in that** the adhesive strip (111) comprises a plurality of hooks intended to hook a stitch making up the textile sock (210).

7. The device (100) according to one of claims 2 to 5, **characterised in that** the adhesive strip (111) comprises a repositionable-type adhesive layer.

8. The device (100) according to one of claims 2 to 5, **characterised in that** the adhesive strip (111) comprises a non-slip coating layer.
